# EUROPÄISCHE PATENTSCHRIFT

(11) **EP 3 593 969 B1**
(45) Veröffentlichungstag und Bekanntmachung des Hinweises auf die Patenterteilung: **08.06.2022**
(21) Anmeldenummer: 19181949.9
(22) Anmeldetag: 24.06.2019
(51) Int. Cl.: B28B 13/02, B05C 11/10, B05C 19/04

(54) **DOSIERVORRICHTUNG ZUR DOSIERUNG VON SCHÜTTGUT IN STEINFORMELEMENTE UND VERFAHREN ZUR HERSTELLUNG VON GEMUSTERTEN STEINEN**
METERING DEVICE FOR DOSING OF BULK MATERIAL IN MOULDS FOR BRICKS AND METHOF OF MANUFACTURNG PATTERNED BRICKS
DISPOSITIF DE DOSAGE POUR MATIÈRES EN VRAC DANS DES MOULES DE BRIQUES ET PROCÉDÉ DE FABRICATION DE BRIQUES TEXTURES

(30) Priorität: 05.07.2018 DE 102018116302
(43) Veröffentlichungstag der Anmeldung: 15.01.2020
(73) Patentinhaber: Masa GmbH, 56626 Andernach (DE)
(72) Erfinder: Reschke, Frank, 56581 Melsbach (DE)
(74) Vertreter: Hannke, Christian

(56) Entgegenhaltungen:
- EP-A2- 2 050 549
- DE-A1- 2 209 228
- JP-A- H 091 517
- JP-A- H08 207 037

## Beschreibung

Die Erfindung betrifft eine Dosiervorrichtung zur Dosierung von Schüttgut in Steinformelemente und zur Anordnung an einem Füllwagen einer Füllvorrichtung einer Steinformmaschine zur Herstellung von gemusterten Steinen, insbesondere Pflastersteinen. Dabei ist der Füllwagen über Steinformelementen in einer Verschieberichtung vor- und zurückschiebbar und mit diesem ist eine erste Schüttgutkomponente in die Steinformelemente füllbar. Die Dosiervorrichtung umfasst zumindest einen Füllkasten, wobei der Füllkasten einen unteren Auslass aufweist, welcher mit Hilfe eines Verschlusses öffen- und verschließbar ist. Dabei ist durch den unteren Auslass eine zweite Schüttgutkomponente aus dem Füllkasten in die Steinformelemente füllbar.

Steinformmaschinen zur Herstellung von mehrfarbigen Pflastersteinen, auch als Steinfertigungsmaschinen bezeichnet, sind in der Industrie bekannt. Generell werden zumindest zwei unterschiedlich gefärbte Schüttgutkomponenten für die Herstellung benötigt. Meist wird aus dem Füllwagen als erstes eine Kernmasse, welche den Hauptvolumenanteil des Pflastersteins darstellt, in die Steinformelemente gefüllt, meist darauf eine Vorsatzmasse, welche die spätere Oberfläche des Pflastersteins mit ggf. dafür optimierten Materialeigenschaften darstellt, aufgebracht und mit der Vorsatzmasse gemischt eine andersfarbige Komponente auf die Oberfläche der Masse in den Steinformelementen aufgebracht, welche ein Muster auf der Oberfläche des Pflastersteins erzeugt.

Für diese Produkte besteht eine hohe Nachfrage nach Steinen mit Mustern, die eine natürliche Steinmaserung, z.B. eine Marmoroptik, nachahmen. Hierfür ist es notwendig Steinformmaschinen zu entwickeln und zu optimieren, mit welchen eine möglichst natürliche Maserung oder Marmorierung erzeugbar ist. Weiterhin ist es vorteilhaft, wenn eine solche Maschine möglichst vielfältig einsetzbar ist und verschiedene Muster oder auch einfarbige Pflastersteine erzeugen kann. DE 22 09 228 A1 offenbart eine Dosiervorrichtung zur Dosierung von Schüttgut in Steinformelemente und zur Anordnung an einem Füllwagen einer Füllvorrichtung einer Steinformmaschine zur Herstellung von gemusterten Steinen, gemäß dem Oberbegriff des Anspruchs 1.

Aufgabe der vorliegenden Erfindung ist es, eine Steinformmaschine zu verbessern und weiterzuentwickeln, sodass mit dieser möglichst vielfältige und/oder natürlich erscheinende Muster auf Steinen erzeugbar sind und die Steinformmaschine dabei möglichst effizient und kostengünstig ist.

Diese Aufgabe wird gelöst durch eine Dosiervorrichtung gemäß dem Anspruch 1.

Die Füllvorrichtung bezeichnet den Teil der Steinformmaschine, mit welcher Schüttgut in die Steinformelemente einfüllbar ist. Bevorzugt stellt die erste Schüttgutkomponente die Vorsatzmasse dar. Die zweite Schüttgutkomponente ist bevorzugt die andersfarbige Komponente. Bevorzugt wird die Kernmasse zuvor in einem eigenen Prozessschritt durch eine gesonderte, zweite Füllvorrichtung in die Steinformelemente eingefüllt. Es ist jedoch auch denkbar, dass die erste Schüttgutkomponente die Kernmasse darstellt. In diesem Fall ist es sowohl denkbar, dass beide Schüttgutkomponenten durch die gleiche Füllvorrichtung oder auch durch verschiedene Füllvorrichtungen in die Steinformelemente füllbar sind. Durch das Teilverschlusselement, das den Auslass im geöffneten Zustand des Verschlusses noch in Teilbereichen verschließt, tritt die zweite Schüttgutkomponente nicht in einem homogenen aus Strahl aus, sondern segmentartig. Segmentartig bedeutet in diesem Zusammenhang, dass das austretende Material in mehreren Strahlen austritt. Bevorzugt sind diese Strahlen nebeneinander und bevorzugt über die gesamte Breite des Auslasses angeordnet. Es ist jedoch auch denkbar, dass die Strahlen übereinander oder in jeder denkbaren geometrischen Anordnung zueinander angeordnet sind. Dabei wird mit einem einzigen Auslass eine Wirkung erzielt als besäße der Füllkasten mehrere kleinere Auslässe. Insbesondere wird so die Wirkung erzielt, dass die zweite Schüttgutkomponente streifenförmig in die Steinformelemente einfüllbar ist. Bevorzugt sind die Steinformelemente nebeneinander, besonders bevorzugt ähnlich einer Matrix in einer horizontalen Ebene, angeordnet. Dabei ergeben sich bevorzugt Reihen von nebeneinander angeordneten Steinformelementen. Die Reihen der Steinformelemente sind nun bevorzugt in Verschieberichtung versetzt neben einander angeordnet, sodass sich die beschriebene Matrixanordnung ergibt. Bei Bewegen der Dosiervorrichtung über den Steinformelementen in der Verschieberichtung ist es bevorzugt, dass in jedes Steinformelement zumindest einer, bevorzugt jedoch mehrere Strahlen die zweite Schüttgutkomponente einfüllen.

Dieses Merkmal erweist sich als besonders vorteilhaft in der Kombination mit einer Antriebseinheit, mit welcher die segmentartig austretende zweite Schüttgutkomponente gegenüber den Steinformelementen quer zur Verschieberichtung hin- und her bewegbar ist. Durch den zeitlichen Verlauf des Hinwegbewegens des Füllwagens mit der Dosiervorrichtung über die Steinformelemente in Verschieberichtung bei gleichzeitigem Hin- und Her-Bewegen in der Querrichtung der austretenden zweiten Schüttgutkomponente, ist die zweite Schüttgutkomponente in einem wellenförmigen bzw. unregelmäßigen Muster in die Steinformelemente einfüllbar. Dabei ist es denkbar, dass das Hin- und Her-Bewegen nach verschiedenen einstellbaren Mustern erfolgt, sodass beispielweise durch eine langsame Hin- und Her-Bewegung in Kombination mit einer im Verhältnis schnellen Bewegung der Dosiervorrichtung in Verschieberichtung ein wellenförmiges Muster mit einer langen Wellenlänge erzeugbar ist. Umgekehrt wäre durch eine schnelle Hin- und Her-Bewegung in Kombination mit einer im Verhältnis langsamen Bewegung der Dosiervorrichtung in Verschieberichtung ein wellenförmiges Muster mit einer kurzen Wellenlänge erzeugbar. Auch ist es denkbar, dass die Hin- und Her-Bewegung keinem gleichförmigen Ablauf folgt, sondern die austretende zweite Schüttgutkomponente möglichst unregelmäßig hin und her bewegt wird, sodass ein möglichst zufällig erscheinendes Muster in den Steinformelementen erzeugbar ist, welches in einer möglichst natürlich erscheinenden Marmorierung oder Maserung des fertigen Steins resultiert. Dabei ist es denkbar, dass die Antriebseinheit eine Steuereinheit aufweist, in welcher verschiedene Bewegungsmuster speicherbar und gezielt ausführbar sind. So sind mit derselben Dosiervorrichtung und derselben Steinformmaschine unterschiedlichste Muster erzeugbar.

Gemäß zumindest einer weiteren Ausführungsform ist der Auslass quer zur Verschieberichtung über die gesamte Breite des Füllkastens angeordnet. Mit dieser Anordnung des Auslasses ist in jedes Steinformelement einer Reihe gleichzeitig die zweite Schüttgutkomponente einfüllbar. Somit sind in allen Steinformelementen einer Reihe gleichzeitig Muster erzeugbar. Die vereinfacht den Prozess der Mustererzeugung deutlich im Gegensatz zu Verfahren, bei welchen die Mustererzeugung bei jedem Steinformelement einzeln und nacheinander erfolgt. Bevorzugt ist der Auslass an der vorderen oder hinteren Seitenwand des Füllkastens angeordnet. Dabei befindet sich der Auslass bevorzugt am unteren Ende der Seitenwand. Bevorzugt ist der Auslass als länglicher, sich über die gesamte Breite des Füllkastens erstreckender Schlitz ausgeführt. Für ein restloses Entleeren des Füllkastens ist es denkbar, dass der Boden des Füllkastens zum Auslass hin ein Gefälle aufweist. Dabei ist es denkbar, dass die Öffnung des Auslasses in der Ebene der Seitenwand angeordnet ist. Die Öffnung kann ebenfalls in der Ebene des Bodens des Füllkastens angeordnet sein. Auch ist es denkbar, dass die Ebene der Öffnung einen Winkel zur Ebene der Seitenwand und/oder einen Winkel zur Ebene des Bodens aufweist, oder dass die Öffnung in einer gebogenen Fläche, wie einer gebogenen Seitenwand oder einem gebogenen Boden, angeordnet ist.

Gemäß zumindest einer weiteren Ausführungsform ist das Teilverschlusselement zumindest im geöffneten Zustand des Verschlusses unmittelbar vor dem Auslass angeordnet und das Teilverschlusselement weist in seiner den Auslass abdeckenden Erstreckung Ausnehmungen auf, sodass der Auslass mit dem Teilverschlusselement in Teilbereichen verschließbar ist und die zweite Schüttgutkomponente durch die Ausnehmungen aus dem Füllkasten in die Steinformelemente füllbar ist.

Das Teilverschlusselement weist eine flächige Grundform auf, welche komplementär zur Form des Auslasses aufgeführt ist. So ist der Auslass flächig mit dem Teilverschlusselement abdeckbar. Die Aussparungen sind bevorzugt in der flächigen Grundform des Teilverschlusselements angeordnet. Dabei ist es sowohl denkbar, dass die Aussparungen als Löcher in einer beliebigen Form und Anordnung auf der Fläche des Teilverschlusselements angeordnet sind, als auch, dass die Aussparungen am Rand der Fläche des Teilverschlusselements angeordnet sind. Dabei können die Aussparungen in der Nähe des Randes angeordnet sein, oder auch direkt am Rand, so dass der Rand an diesen Stellen ein alternierendes Profil darstellt.

Bevorzugt ist das Teilverschlusselement rechteckig ausgeführt. Bevorzugt weist das Teilverschlusselement an seiner unteren Kante ein sägezahnartiges, alternierendes Profil auf. Damit besitzt das Teilverschlusselement bezogen auf die Querrichtung nebeneinander angeordnete Bereiche mit einer größeren vertikalen Erstreckung und andere Bereiche mit einer kleineren vertikalen Erstreckung, wobei die obere Kante des Teilverschlusselements über die gesamte Breite in Querrichtung eine Gerade ist Im geöffneten Zustand des Verschlusses ist das Teilverschlusselement mit dem alternierenden Profil vor dem Auslass angeordnet, sodass an den Stellen an welchen das Teilverschlusselement eine größere vertikale Erstreckung aufweist, der Auslass durch das Teilverschlusselement verschlossen ist und an den Stellen mit kleinerer vertikaler Erstreckung die Ausnehmungen angeordnet sind.

Bevorzugt ist das alternierende Profil ein Rechteckprofil. Das Rechteckprofil ist in besonders einfacher und wirkungsvoller Weise dazu geeignet den Auslass in Teilbereichen zu verschließen. Durch das Rechteckprofil ergeben sich vertikale Kanten der Teilbereiche, was einer besonders einfachen Form der Unterteilung in verschlossene und nichtverschlossene Teilbereiche entspricht.

Gemäß zumindest einer weiteren Ausführungsform ist das Teilverschlusselement auswechselbar.

Dies bedeutet, dass das Teilverschlusselement bevorzugt lösbar an der Dosiervorrichtung befestigt ist. Dabei ist es denkbar, dass das Teilverschlusselement direkt vor dem Auslass am Füllkasten befestigt ist, oder auch am Verschluss selbst. Bevorzugt ist das Teilverschlusselement mit Schrauben befestigbar. Durch die lösbare Befestigung ist das Teilverschlusselement schnell und mit geringem Aufwand gegen ein anderes Teilverschlusselement, beispielsweise mit anders angeordneten Aussparungen und/oder Aussparungen anderer Größe und/oder Anzahl auswechselbar, sodass die zweite Schüttgutkomponente in anderen Bereichen des Auslasses aus der Dosiervorrichtung austritt. Durch das auswechselbare alternierende Profil kann so auf einfache und schnelle Art das von der Dosiervorrichtung erzeugte Muster variiert werden.

Gemäß zumindest einer weiteren Ausführungsform weist die Dosiervorrichtung zumindest eine Rahmenvorrichtung auf, welche an zumindest einer Seite des Füllkastens angeordnet ist, an welcher der Füllkasten hängend befestigbar ist. Die Ausführung der Rahmenvorrichtung ist bevorzugt eine, den Füllkasten umschließende Konstruktion im Sinne einer Aufhängevorrichtung. Bevorzugt ist die Rahmenvorrichtung am Füllwagen der Füllvorrichtung einer Steinformmaschine befestigbar. Der Füllkasten ist bevorzugt an der Rahmenvorrichtung aufgehängt. Bevorzugt weist die Rahmenvorrichtung Abdeckelemente auf, welche empfindliche Bereiche der Dosiervorrichtung vor Beschädigung schützen. Insbesondere schützt die Rahmenvorrichtung mit Hilfe von Abdeckelementen den Öffnungs- und Schließmechanismus des Auslasses vor Beschädigung. Bevorzugt weist die Rahmenvorrichtung auf ihrer Oberseite eine Aussparung auf durch welche der Füllkasten mit Schüttgut befüllbar ist. Weiterhin weist die Rahmenvorrichtung bevorzugt eine zweite Aussparung auf, welche am Auslass des Füllkastens angeordnet ist.

Gemäß zumindest einer weiteren Ausführungsform ist mit der Antriebseinheit der Füllkasten gegenüber der Rahmenvorrichtung in zumindest einer Richtung quer zur Verschieberichtung hin- und her bewegbar. Bevorzugt ist der Füllkasten in zumindest einer Richtung quer zur Verschieberichtung hin- und her pendelbar an der Rahmenvorrichtung aufgehängt. Mit Hilfe der Antriebseinheit ist eine Pendelbewegung des Füllkastens gegenüber der Rahmenvorrichtung bevorzugt gezielt hervorrufbar. Bevorzugt kann mit Hilfe der Antriebseinheit eine Pendelbewegung des Füllkastens gegenüber der Rahmenvorrichtung gezielt verhindert werden, beispielsweise durch ein Arretierelement der Antriebseinheit. In dieser Ausführungsform kann besonders leicht die Hin- und Her-Bewegung der austretenden zweiten Schüttgutkomponente gegenüber den Steinformelementen erzeugt werden. Mit Hilfe der Antriebseinheit wird bevorzugt bei geöffnetem Auslass der Füllwagen gegenüber der Rahmenvorrichtung quer zur Verschieberichtung hin und her bewegt. Damit bewegen sich die Teilbereiche, aus welchen die zweite Schüttgutkomponente austritt, gegenüber den Steinformelementen.

Gemäß zumindest einer weiteren Ausführungsform ist mit der Antriebseinheit zumindest das Teilverschlusselement gegenüber dem Füllkasten in zumindest einer Richtung quer zur Verschieberichtung hin- und her bewegbar. Diese Ausführungsform erzielt die gleiche Wirkung wie die zuvor beschriebene. Allerdings wird nun nicht der gesamte Füllkasten bewegt, sondern lediglich das Teilverschlusselement. Dadurch werden die den Auslass teilweise verschließenden Teilbereiche des Teilverschlusselements quer zur Verschieberichtung hin und her verschoben. Damit verschieben sich auch die unverschlossenen Teilbereiche, aus welchen die zweite Schüttgutkomponente austritt, in einer Richtung quer zur Verschieberichtung und somit auch gegenüber den Steinformelementen. Dabei ist es denkbar, dass das nur Teilverschlusselement bewegbar ist, oder aber, dass das Teilverschlusselement an einem Halteelement befestigt ist und das Halteelement mit Hilfe der Antriebseinheit bewegbar ist. Es ist dabei denkbar, dass das Teilverschlusselement am Verschluss befestigt ist und der Verschluss mit der Antriebseinheit quer zu Verschieberichtung bewegbar ist. Bevorzugt ist der Verschluss mit der Antriebseinheit zusätzlich zur Öffnungsbewegung des Verschlusses in einer weiteren Richtung bewegbar.

Weiterhin ist es denkbar, dass die Dosiervorrichtung zwei, in Querrichtung wirkende Antriebseinheiten aufweist, wobei die eine den Füllkasten gegenüber der Rahmenvorrichtung bewegt und die andere das Teilverschlusselement gegenüber dem Füllkasten. Damit können zwei sich überlagernde Querbewegungen der austretenden zweiten Schüttgutkomponente erzeugt werden, sodass mit dieser Ausführungsform weitere Freiheitsgrade in der Einstellbarkeit des Musters erzeugt werden.

Gemäß zumindest einer weiteren Ausführungsform ist der Verschluss als Schieber ausgeführt, wobei der Verschluss zumindest in einer Verschieberichtung parallel zur Ebene der Öffnung des Auslasses verschiebbar und damit aus einer den Auslass verschließenden Position in eine geöffnete Position bringbar ist. Für eine einfache Umsetzung der Erfindung ist es besonders vorteilhaft, wenn der Verschluss als Schieber ausgeführt ist, welcher in einer vertikalen Richtung zwischen geöffneter und geschlossener Position verschiebbar ist. So kann mit Hilfe einer besonders einfachen Ansteuerung der Auslass verschlossen und geöffnet werden. Hierbei ist es denkbar, dass der Verschluss in einer, bezogen auf eine vertikale Richtung, abgesenkten Position den Auslass verschließt. Durch anheben des Verschlusses in einer vertikalen Richtung ist der Auslass bevorzugt öffenbar.

Gemäß zumindest einer weiteren Ausführungsform ist das Teilverschlusselement als Teil des Verschlusses ausgeführt, wobei das Teilverschlusselement in der geöffneten Position des Verschlusses unmittelbar vor dem Auslass angeordnet ist und diesen in Teilbereichen verschließt. Bevorzugt verschließt der Verschluss mit dem Teilverschlusselement in dieser geöffneten Position den Auslass noch in Teilbereichen. Weiterhin ist es denkbar, dass der Verschluss mit dem Teilverschlusselement in eine dritte Position bringbar ist, in welcher der Auslass vollständig geöffnet ist. Bevorzugt ist in dieser dritten Position das Teilverschlusselement nicht mehr unmittelbar vor dem Auslass angeordnet. Diese Position ist beispielsweise für Wartungszwecke interessant oder auch für eine zweckfremde Nutzung der Dosiervorrichtung vorstellbar, beispielsweise zum flächendeckenden Aufbringen einer zusätzlichen Schicht, z.B. einer Oberflächenschicht oder Zwischenschicht, auf das Material in den Steinformelementen oder auf den Boden der Steinformelemente.

In dieser Ausführungsform ist der Verschluss bevorzugt als rechteckiges Flächenelement ausgeführt. Das Teilverschlusselement ist dabei bevorzugt in der Ebene der flächigen Erstreckung des Flächenelements angeordnet. Bevorzugt ist das Teilverschlusselement direkt angrenzend zu dem Flächenelement des Verschlusses angeordnet. Dabei deckt das Flächenelement den Auslass im geschlossenen Zustand bevorzugt vollständig ab. Im geöffneten Zustand des Verschlusses deckt das Teilverschlusselement den Auslass mit Hilfe der Ausnehmungen bevorzugt in Teilbereichen ab

In der zuvor beschriebenen dritten Position ist kein Bereich des Verschlusses oder des Teilverschlusselements mehr vor dem Auslass angeordnet, was durch eine weitere Aufwärtsbewegung des Verschlusses mit dem daran angeordneten Teilverschlusselement aus der geöffneten Position zu erreichen ist.

Gemäß zumindest einer weiteren Ausführungsform sind in Verschieberichtung des Verschlusses mehrere Teilverschlusselemente aneinander angeordnet, wobei der Verschluss in Verschieberichtung in verschiedene geöffnete Positionen verschiebbar ist, in welchen jeweils ein Teilverschlusselement vor dem Auslass angeordnet ist.

Dies ist besonders Vorteilhaft, da in dieser Ausführungsform durch einfaches Verschieben des Verschlusses mit den daran angeordneten Teilverschlusselementen zwischen einer geschlossenen und verschiedenen geöffneten Positionen gewechselt werden kann. In den verschiedenen geöffneten Positionen ist bevorzugt jeweils ein anderes der Teilverschlusselemente oder auch gar kein Teilverschlusselement vor dem Auslass angeordnet. Dadurch kann besonders leicht zwischen verschiedenen Mustern gewechselt werden, ohne dass eine Demontage der Teilverschlusselemente notwendig ist. Die Teilverschlusselemente sind bevorzugt lösbar aneinander und/oder am Verschluss und/oder einem Halteelement befestigt. So sind die Teilverschlusselemente leicht auswechselbar und es sind beliebige Teilverschlusselemente an der Dosiervorrichtung anordenbar. Bevorzugt ist auch in dieser Ausführungsform eine weitere, vollständig geöffnete Position möglich, in welcher keines der Teilverschlusselemente vor dem Auslass angeordnet ist und der Auslass somit vollständig geöffnet ist.

Gemäß zumindest einer weiteren Ausführungsform ist der Verschluss als Klappe ausgeführt, welche durch Drehung um eine Drehachse, welche parallel zu zumindest einer der Außenkanten des Verschlusses angeordnet ist, aus einer den Auslass verschließenden Position in eine geöffnete Position bringbar ist.

Bevorzugt ist die Drehachse parallel zur oberen Kante des Verschlusses angeordnet. Dabei ist die Klappe bevorzugt durch eine Aufwärtsdrehbewegung öffenbar. Die besitzt den Vorteil, dass die Klappe in dieser hochgeklappten Position nicht das Einfüllen der zweiten Schüttgutkomponente in die Steinformelemente behindert. Es ist jedoch auch denkbar die Drehachse derart anzuordnen, dass die Klappe nach unten oder zur Seite aufklappbar ist. Bevorzugt ist in dieser Ausführungsform das Teilverschlusselement am Füllkasten oder einem Halteelement angeordnet und nicht an der Verschlussklappe. Bevorzugt ist jedoch auch in dieser Ausführungsform das Teilverschlusselement lösbar befestigt. Bevorzugt ist das Teilverschlusselement auswechselbar. Auch wäre in diesem Fall eine Ausführung des Teilverschlusselements als Sieb- oder Lochplatte denkbar.

Weitergehend ist es denkbar, dass die Füllvorrichtung der Steinformmaschine weitergehend ein Abstreifelement und ein Walzenelement aufweist und
a) die Dosiervorrichtung ist in Verschieberichtung betrachtet zwischen dem Füllwagen und dem Walzenelement angeordnet ist und das Walzenelement zwischen der Dosiervorrichtung und dem Abstreifelement angeordnet, oder
b) die Dosiervorrichtung ist in Verschieberichtung betrachtet zwischen dem Walzenelement und dem Abstreifelement angeordnet ist und das Walzenelement zwischen dem Füllwagen und der Dosiervorrichtung angeordnet.

Die erfindungsgemäße Dosiervorrichtung ist insbesondere vorteilhaft, weil sie unabhängig von der Art der verwendeten Steinformmaschine, Füllvorrichtung der Steinformmaschine oder der Art des verwendeten Füllwagens verwendbar ist. Die erfindungsgemäße Dosiervorrichtung ist mit fast allen Steinformmaschinen verwendbar. Insbesondere ist auch eine Nachrüstung einer Steinformmaschine mit der erfindungsgemäßen Dosiervorrichtung möglich. Dies ist vor allem möglich, weil die Dosiervorrichtung eine große Variabilität hinsichtlich ihrer genauen Positionierung in der Füllvorrichtung der Steinformmaschine aufweist. Je nach technischen Voraussetzungen oder gewünschtem Ergebnis kann die Dosiervorrichtung sowohl direkt am Füllwagen der Füllvorrichtung der Steinformmaschine angeordnet werden, oder auch zwischen Walzenelement und Abstreifelement. Auch sind viele weitere Positionen der Dosiervorrichtung in der Füllvorrichtung der Steinformmaschine denkbar. Sogar eine Anordnung im Füllwagen der Füllvorrichtung der Steinformmaschine ist dabei möglich.

Die Aufgabe wird auch durch ein Verfahren zur Herstellung von gemusterten Steinen, insbesondere Pflastersteinen, mit einer Füllvorrichtung einer Steinformmaschine umfassend Steinformelemente, einen Füllwagen, mit welchem eine erste Schüttgutkomponente in die Steinformelemente füllbar ist und welcher in einer Verschieberichtung über den Steinformelementen vor- und zurückschiebbar ist, sowie eine am Füllwagen angeordnete Dosiervorrichtung, wobei die Dosiervorrichtung zumindest eine Antriebseinheit und einen Füllkasten umfasst, wobei der Füllkasten einen unteren Auslass aufweist, welcher mit Hilfe eines Verschlusses öffen- und verschließbar ist, wobei der Auslass im geöffneten Zustand mit Hilfe eines Teilverschlusselements in einer Richtung quer zur Verschieberichtung noch in Teilbereichen verschließbar ist, sodass die zweite Schüttgutkomponente segmentartig in die Steinformelemente füllbar ist, wobei das Teilverschlusselement eine flächige Grundform aufweist, welche komplementär zur Form des Auslasses aufgeführt ist, gelöst, umfassend die Schritte:
- Einfüllen der ersten Schüttgutkomponente aus dem Füllwagen in die Steinformelemente durch Bewegung des Füllwagens in oder entgegen einer Verschieberichtung über die Steinformelemente;
- Öffnen des Verschlusses des Auslasses der Dosiervorrichtung und Einfüllen der zweiten Schüttgutkomponente durch Bewegung der Dosiervorrichtung über die Steinformelemente in oder entgegen der Verschieberichtung bei gleichzeitigem Hin- und Her-Bewegen der austretenden zweiten Schüttgutkomponente gegenüber den Steinformelementen in einer Querrichtung quer zur Verschieberichtung mit Hilfe der Antriebseinheit.

Bevorzugt werden vor Beginn des beschriebenen Verfahrens der Füllkasten der Dosiervorrichtung und der Füllwagen mit Hilfe zumindest eines Silos bevorzugt von oben mit den Schüttgutkomponenten befüllt. Bevorzugt ist das Silo hinter den Steinformelementen platziert, sodass nach dem Befüllvorgang der Füllwagen mit der Dosiervorrichtung in Verschieberichtung über die Steinformelemente im Vorwärtshub bewegbar ist und dabei bevorzugt die erste Schüttgutkomponente in die Steinformelemente füllbar ist. Die Befüllung mit der zweiten Schüttgutkomponente kann jedoch auch durch ein anderes Silo oder eine andere Befüllvorrichtung erfolgen, welche beliebig angeordnet sein können. Bevorzugt folgt auf den Vorwärtshub ein Rückwärtshub, also eine Bewegung des Füllwagens entgegen der Verschieberichtung. Bevorzugt ist während des Rückhubs die zweite Schüttgutkomponente in die Steinformelemente füllbar. Dabei ist es jedoch auch denkbar, das Silo auf der anderen Seite der Steinformelemente angeordnet ist, sodass die erste Schüttgutkomponente in einem Rückhub und anschließend die zweite Schüttgutkomponente in einem Vorwärtshub einfüllbar ist. Des Weiteren ist es denkbar zuerst die zweite Schüttgutkomponente mit Hilfe der Dosiervorrichtung in einem Vorwärts- oder Rückwärtshub in die Steinformelemente einzufüllen und anschließend die erste Schüttgutkomponente während einer Bewegung in der entgegen gesetzten Richtung. Die Variabilität im Verfahrensablauf ist besonders vorteilhaft, da die Anordnung der einzelnen Komponenten der Steinformmaschine an die lokalen Gegebenheiten anpassbar ist und außerdem eine größtmögliche Variabilität im Ablauf des Produktionsverfahrens erreichbar ist, was die Verwendungsmöglichkeiten der Maschine erhöht.

Weitergehend ist es denkbar, dass nach den zuvor beschriebenen Verfahrensschritten weitere Verfahrensschritte für die Produktion der Steine durchgeführt werden. Denkbar sind z.B. das Vorbehandeln der Steinformelemente, z.B. mit Anti-Haftmitteln, Aufbringen von weiteren Schüttgutkomponenten (dies kann auch zwischen oder während der zuvor beschriebenen Verfahrensschritte erfolgen), Schritte zum Glätten der Schüttgutoberfläche in den Steinformelementen, Rüttelschritte zur Verdichtung des Schüttguts, Schritte zur Aushärtung oder Trocknung des Schüttguts, Nachbehandlungen der Oberfläche, wie Schleifen, Imprägnieren oder Härten.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: die prinzipielle Anordnung der einzelnen Komponenten einer Füllvorrichtung einer Steinformmaschine 4 in einer Ausführungsform in Seitenansicht;
- Fig. 2: eine Prinzipskizze der Dosiervorrichtung 1 in Aufsicht;
- Fig. 3: eine Darstellung der Dosiervorrichtung 1 in perspektivischer Ansicht;
- Fig. 4: eine Darstellung der Dosiervorrichtung 1 entlang eines Schnittes in Verschieberichtung V;
- Fig. 5a: eine Darstellung der Dosiervorrichtung 1 in Vorderansicht mit geschlossenem Auslass 6;
- Fig. 5b: eine Darstellung der Dosiervorrichtung 1 in Vorderansicht mit geöffnetem Auslass 6;
- Fig. 6: eine schematische Darstellung eines fertig befüllten Steinformelements 2 in Aufsicht;
- Fig. 7: eine Detaildarstellung des Verschlusses 7 gemäß einer Ausführungsform;
- Fig. 8a: eine Darstellung der Dosiervorrichtung 1 in Vorderansicht mit einem anderen Teilverschlusselement 15;
- Fig. 8b: eine Detaildarstellung des anderen Teilverschlusselements 15;
- Fig. 8c: eine Detaildarstellung eines weiteren Teilverschlusselements 15;
- Fig. 9: eine schematische Darstellung der Dosiervorrichtung 1 und der Steinformelemente 2 in Aufsicht;
- Fig. 10 a: eine Anordnungsmöglichkeit der Dosiervorrichtung 1 am Füllwagen 3;

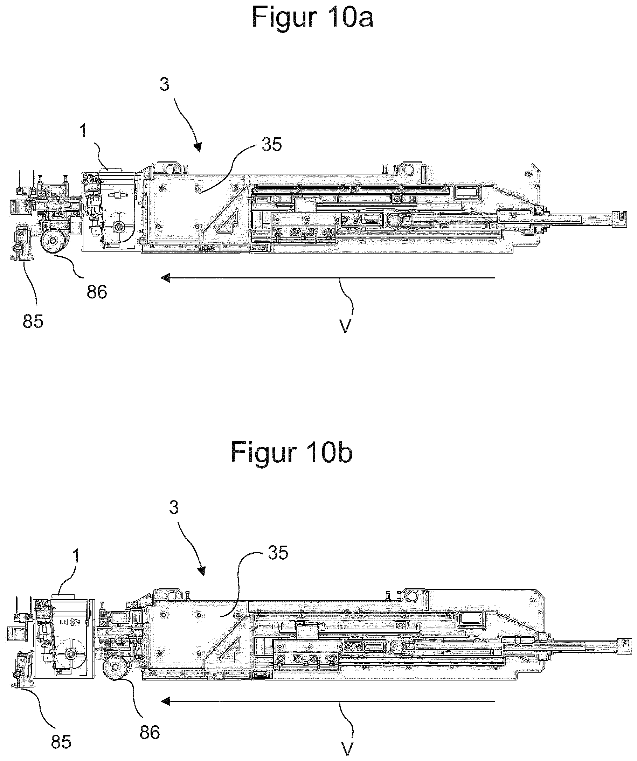

- Fig. 10 b: eine weitere Anordnungsmöglichkeit der Dosiervorrichtung 1 am Füllwagen 3.

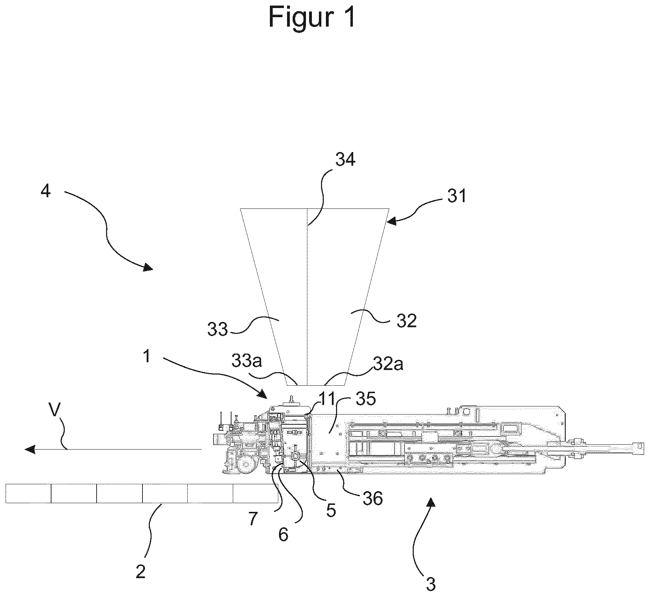

Figur 1 zeigt die prinzipielle Anordnung der einzelnen Komponenten einer Füllvorrichtung einer Steinformmaschine 4 in einer Ausführungsform in Seitenansicht. Am Füllwagen 3 ist in Verschieberichtung V die Dosiervorrichtung 1 vorne angeordnet. Die Dosiervorrichtung 1 und der Füllwagen 3 weisen jeweils einen Füllkasten auf 5, 35, welcher von oben mit Hilfe des Silos 31 mit Schüttgut befüllbar ist. Das Silo 31 weist bevorzugt eine Trennwand 34 auf, welche den Innenraum des Silos 31 in einer erste und zweite Kammer unterteilt 32, 33, in welchen verschiedene Schüttgutkomponenten getrennt voneinander vorhaltbar und von dort durch die jeweiligen Auslässe 32a, 33a getrennt in die Füllkästen 5, 35 einfüllbar ist. Es ist jedoch ebenfalls denkbar, dass mit dem Silo lediglich die erste Schüttgutkomponente in den Füllwagen 3 einfüllbar ist. Bevorzugt ist in diesem Fall die Dosiervorrichtung 1 mit Hilfe eines separaten Silos mit der zweiten Schüttgutkomponente 8 befüllbar. Das zweite Silo kann dabei an beliebiger Stelle angeordnet sein. Hierdurch wird dem Umstand Rechnung getragen, dass auf Grund des geringen Mengendurchsatzes der zweiten Schüttgutkomponente 8 die Dosiervorrichtung 1 nicht notwendigerweise genauso häufig befüllt werden muss wie der Füllwagen 3 mit der ersten Schüttgutkomponente. Füllwagen 3 und Dosiervorrichtung 1 sind zusammen in oder entgegen Verschieberichtung V über Steinformelemente 2 bewegbar. Dabei sind durch Auslässe 6, 36 an den Füllkästen 5, 35 Schüttgutkomponenten in die Steinformelemente füllbar. Der Füllkasten 5 der Dosiervorrichtung 1 weist einen Verschluss 7 zum Verschließen des Auslasses 6 auf. Bevorzugt weist auch der Auslass 36 des Füllkastens 35 einen Verschluss auf.

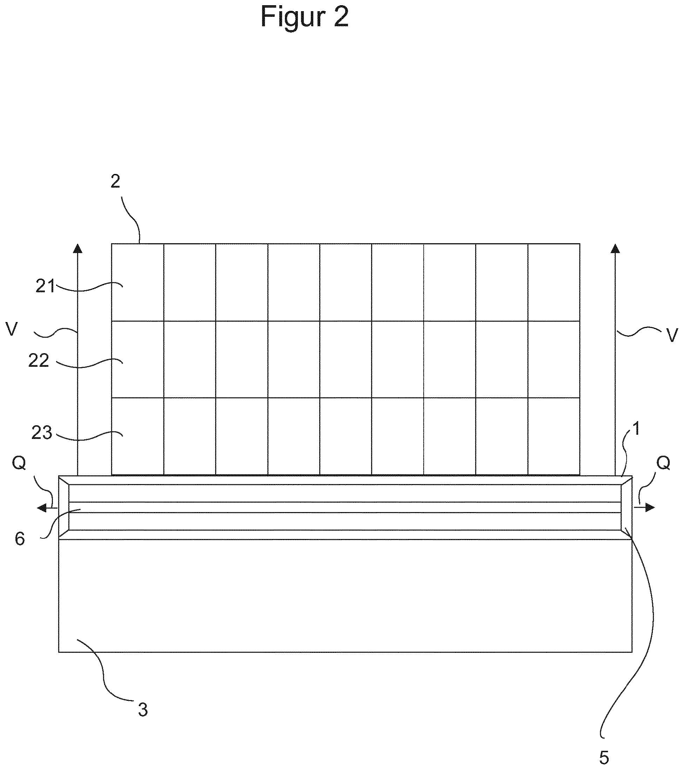

Figur 2 zeigt eine Prinzipskizze der Dosiervorrichtung 1 in Aufsicht. Der Füllkasten 5 der Dosiervorrichtung 1 und der Füllwagen 4 sind über den Steinformelementen 2 angeordnet und in und entgegen der Verschieberichtung V bewegbar. Die Steinformelemente 2 sind in einer Matrix angeordnet, bestehend aus mehreren Reihen 21, 22, 23 welche in Verschieberichtung V versetzt nebeneinander angeordnet sind. In jedem Steinformelement 2 ist ein Stein formbar. Der Füllkasten 5 der Dosiervorrichtung 1 ist in Querrichtung Q, welche senkrecht zur Verschieberichtung V und horizontal angeordnet ist, hin und her bewegbar.

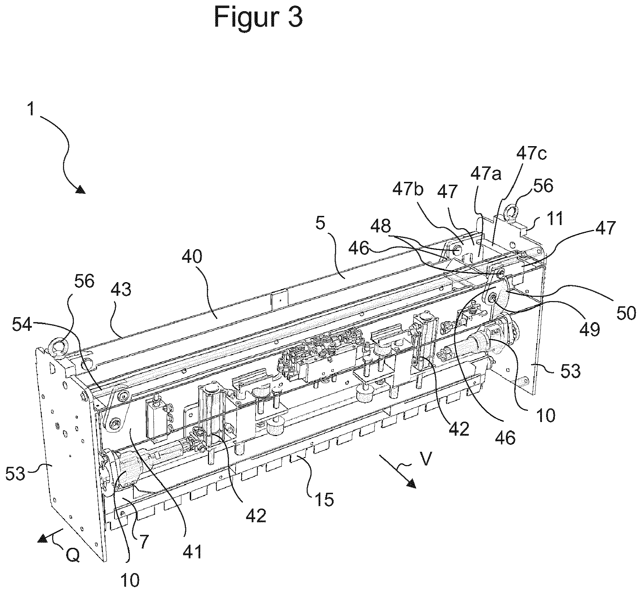

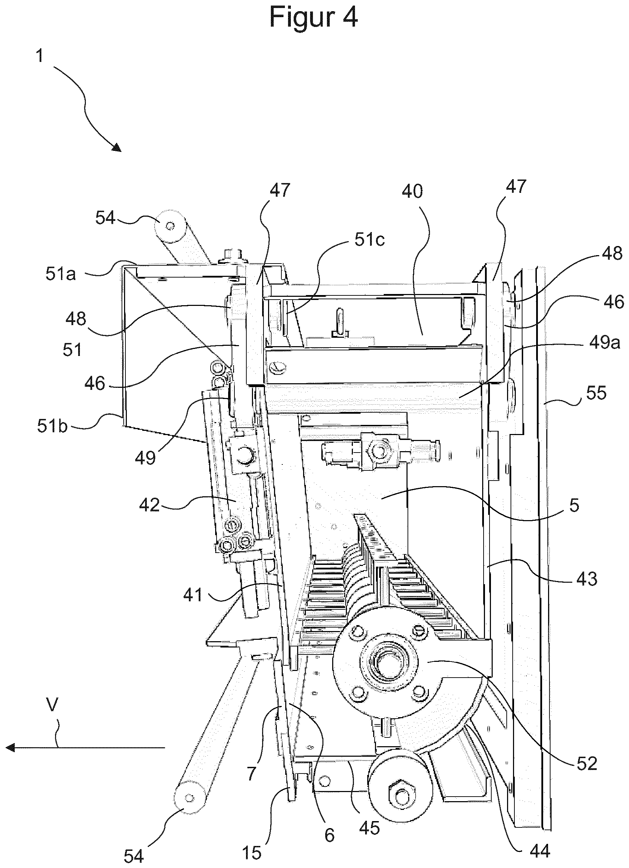

Figuren 3 und 4 zeigen die Dosiervorrichtung 1 in perspektivischer Ansicht (Fig. 3) und entlang eines Schnittes in Verschieberichtung V (Fig. 4). Der Füllkasten 5 weist an seiner Oberseite eine Einfüllöffnung 40 auf. Der Auslass 6 ist am unteren Ende der in Verschieberichtung V weisenden Vorderseite 41 des Füllkastens 5 angeordnet. Der Verschluss 7 ist als Schieber ausgeführt, welcher mit einem Antrieb 42 öffen und schließbar ist. Die Rückseite 43 des Füllkastens 5 ist bevorzugt abnehmbar ausgeführt. Bevorzugt geht die Rückseite 43 mit einer Rundung 44 in den Boden 45 des Füllkastens über. Zur besseren Entleerung des Füllkastens 5 kann der Boden 45 zum Auslass 6 hin abfallend aufgeführt sein. Auch kann für diesen Zweck im Inneren des Füllkastens 5 ein Rührelement 52 angeordnet sein, welches mit einem Kettenantrieb 52a drehbar ist. Das Rührelement 52 kann bevorzugt als Rührwelle oder auch als Dosierwelle ausgeführt sein. Es ist ebenfalls denkbar anstatt des Rührelements 52 ein Vibrationselement zu verwenden, mit welchem durch Erzeugung von Vibrationen Schüttgutreste aus dem Füllkasten 5 bewegbar sind. Bevorzugt ist die Zuführungsmenge der zweiten Schüttgutkomponente 8 zum Auslass 6 regelbar. Bevorzugt erfolgt die Regelung der Zuführungsmenge mit Hilfe des Rührelements 52. Bevorzugt ist die Drehzahl des Rührelements 52 regelbar. Der Füllkasten 5 ist an der Rahmenvorrichtung 11 an seinen oberen Ecken mit jeweils zumindest einem Hebel 46 aufgehängt. Der Hebel 46 ist an seinem einen Ende 48 drehbar an einem bevorzugt L-fömigen Tragelement 47 der Rahmenvorrichtung 11 befestigt. Bevorzugt weist das Tragelement einen ersten, vertikalen Schenkel 47a auf, welcher an dem Seitenelement 53 befestigt ist, und einen zweiten, horizontalen Schenkel, an welchem der Hebel 46 mit seinem ersten Ende 48 drehbar befestigt ist. An seinem anderen Ende 49 ist der Hebel 46 drehbar am Füllkasten 5 befestigt. Bevorzugt sind die in Verschieberichtung hintereinander liegenden Hebel 46 von jeweils zwei oberen Ecken des Füllkastens 5 durch eine gemeinsame Drehachse 49a verbunden, welche parallel zur Verschieberichtung V angeordnet ist. Bevorzugt sind die in Verschieberichtung hintereinander liegenden Tragelemente 47 von jeweils zwei oberen Ecken des Füllkastens 5 durch ein Verbindungselement 47c verbunden, welches parallel zur Verschieberichtung V angeordnet ist. Die Seitenelemente 53 sind über Stangen 54 und eine Rückwand 55 mit einander, den Füllkasten 5 umschließend, verbunden. Der Füllkasten 5 ist mit der Antriebseinheit 10 und durch die drehbare Befestigung der Hebels 46 in Querrichtung Q gegenüber der Rahmenvorrichtung hin und her bewegbar. Bevorzugt ist die Antriebseinheit 10 an der Vorderseite 41 des Füllkastens 5 angeordnet. Bevorzugt ist die Antriebseinheit als pneumatischer Balgzylinder 10, 50 ausgeführt. Durch einstellbare Endanschläge ist ein Anschlagen des Füllkastens 5 an den Seitenelementen 53 verhinderbar. Zum Schutz aller Antriebselemente 10, 42 weist die Rahmenvorrichtung 11 an ihrer Vorderseite oben eine Abdeckung 51 auf, welche als U-Profil mit einer Grundseite 51a, einem längeren, linken Schenkel 51b und einem kürzeren, rechten Schenkel 51c. Zum Transport der Dosiervorrichtung 1 weist die Rahmenvorrichtung 11 Befestigungsösen 56 auf.

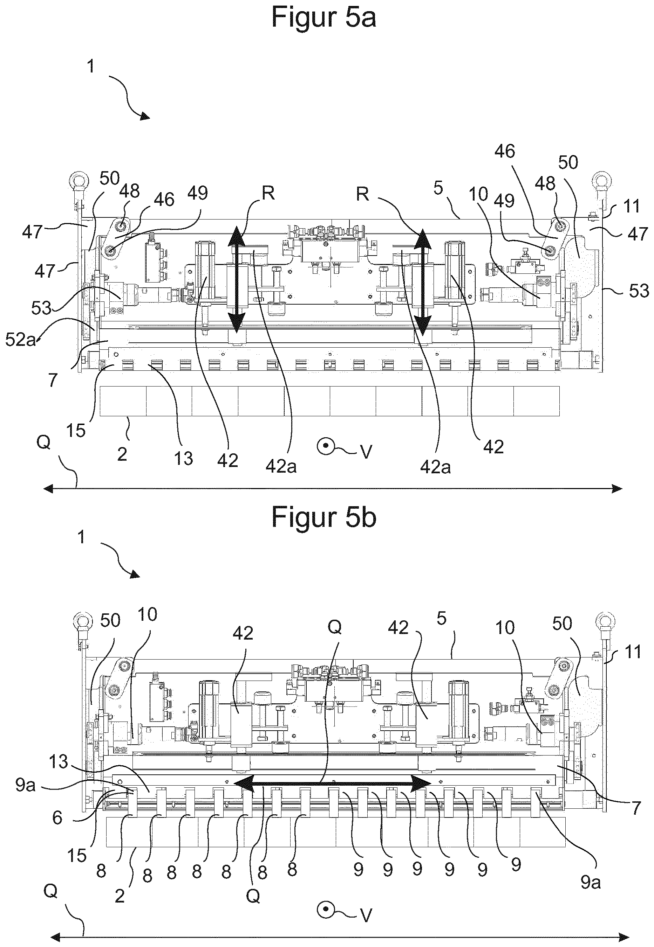

Die Figuren 5a und 5b zeigen die Dosiervorrichtung 1 in Vorderansicht. Figur 5a zeigt die Dosiervorrichtung 1 mit geschlossenem Auslass 6. Figur 5b zeigt die Dosiervorrichtung 1 mit geöffnetem Auslass 6. Im geschlossenen Zustand verschließt der Verschluss 7 den Auslass 6 vollständig. Der Verschluss 7 und das daran angeordnete Teilverschlusselement 15 sind mit dem Antrieb 42 in vertikaler Richtung R bewegbar. Bevorzugt ist der Antrieb 42 als zwei parallel wirkende Pneumatik-Zylinder ausgeführt. Durch die Bewegung des Verschlusses 7 in vertikaler Richtung R nach oben, ist der Auslass 6 öffenbar. Bevorzugt sind sowohl die geöffnete als auch die geschlossene Position des Schiebers durch Endanschläge 42 a genau einstellbar. Im geöffneten Zustand ist das Teilverschlusselement 15 mit dem alternierenden Profil 13 vor dem Auslass 6 angeordnet und verschließt diesen noch in Teilbereichen 9. Durch die nicht vom alternierenden Profil 13 verschlossenen Teilbereiche, also die Ausnehmungen 9a (exemplarisch zwei Mal markiert) des Teilverschlusselements 15, tritt die zweite Schüttgutkomponente 8 segmentartig aus dem Auslass 6 aus und ist in die Steinformelemente 2 füllbar. Gleichzeitig ist der Füllkasten 5 mit der Antriebseinheit 10 in der Querrichtung Q bewegbar, sodass die Ausnehmungen 9a des Auslasses 6, und damit auch die daraus austretende zweite Schüttgutkomponente 8, gegenüber den Steinformelementen 2 bewegbar ist.

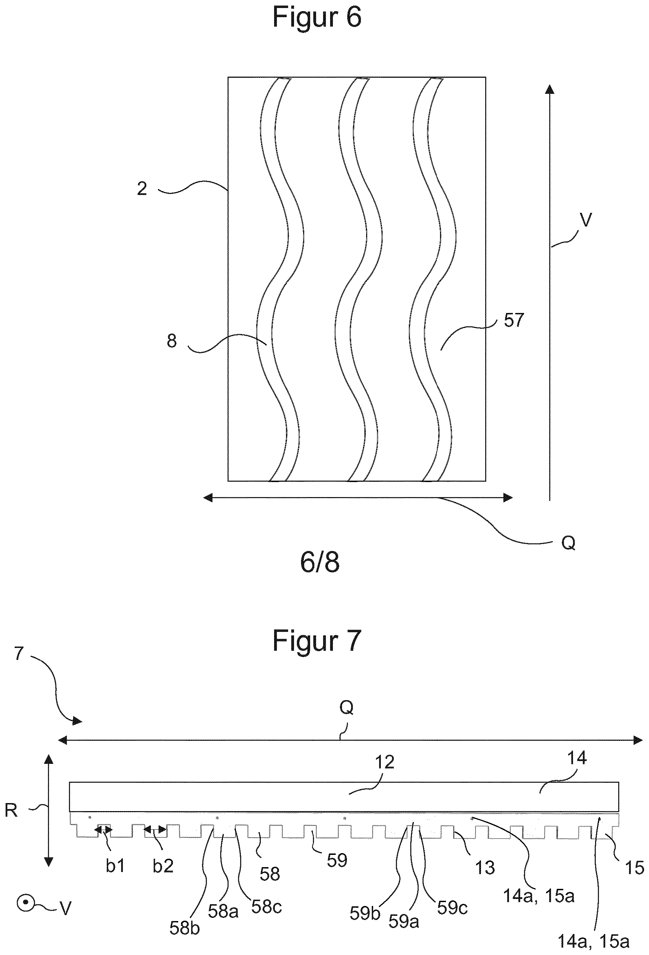

Figur 6 zeigt schematisch ein fertig befülltes Steinformelement 2 in Aufsicht. Das Steinformelement 2 ist mit der ersten Schüttgutkomponente 57 fast komplett aufgefüllt. Auf der Oberfläche der ersten Schüttgutkomponente 57 wurde mit Hilfe der Dosiervorrichtung mit ihrem segmentartig verschlossenen Auslass 6 und gleichzeitiger linearer Bewegung dieser in Verschieberichtung V und gleichzeitiger Hin und Her-Bewegung in Querrichtung Q die zweite Schüttgutkomponente 8, welche eine andere Farbe als die erste Schüttgutkomponente 57 aufweist, in wellenförmigen Streifen aufgebracht. Die hier gezeigten Streifen sind parallel zur Verschieberichtung V angeordnet.

Figur 7 zeigt eine Detaildarstellung des Verschlusses 7 mit daran angeordnetem Teilverschlusselement 15. Der Verschluss umfasst einen flächigen Teil 14 und ist als Flächenelement 12 ausgeführt. Das Teilverschlusselement 15 ist mit einem alternierenden Profil 13 ausgeführt, welches Zähne 58 und Ausnehmungen 59 umfasst, welche abwechselnd zueinander in Querrichtung Q nebeneinander angeordnet sind. Zähne 58 und Ausnehmungen 59 sind rechtwinklig ausgeführt und weisen bevorzugt eine horizontale Grundseite 58a, 59a sowie einen vertikalen, linken Rand 58b, 59b und einen vertikalen, rechten Rand 58c, 59c auf. und Die Ausnehmungen 59 weisen eine Breite b₁ auf. Die Zähne 58 weisen eine Breite b₂ auf. Die Zähne 58 sind im geöffneten Zustand vor dem Auslass 6 angeordnet und verschließen diesen teilweise. Durch die Ausnehmungen 59 tritt im geöffneten Zustand die zweite Schüttgutkomponente 8 aus dem Auslass 6 aus. Die Breite b₁ der Ausnehmungen 59 beeinflusst direkt die Breite der wellenförmigen Streifen, in welchen die zweite Schüttgutkomponente 8 in die Steinformelemente 2 gefüllt wird (vgl. Fig. 6). Die Breite b₂ der Zähne 58 beeinflusst direkt den Abstand der wellenförmigen Streifen. Das Teilverschlusselement 15 ist lösbar am flächigen Teil 14 des Verschlusses 7 befestigt. Bevorzugt weisen das Teilverschlusselement 15 und der flächige Teil 14 Bohrungen 14a und 15a in welchen die beiden Teile aneinander mit Hilfe von Schrauben befestigbar sind. Teilverschlusselement 15 ist somit gegen ein anderes Teilverschlusselement austauschbar.

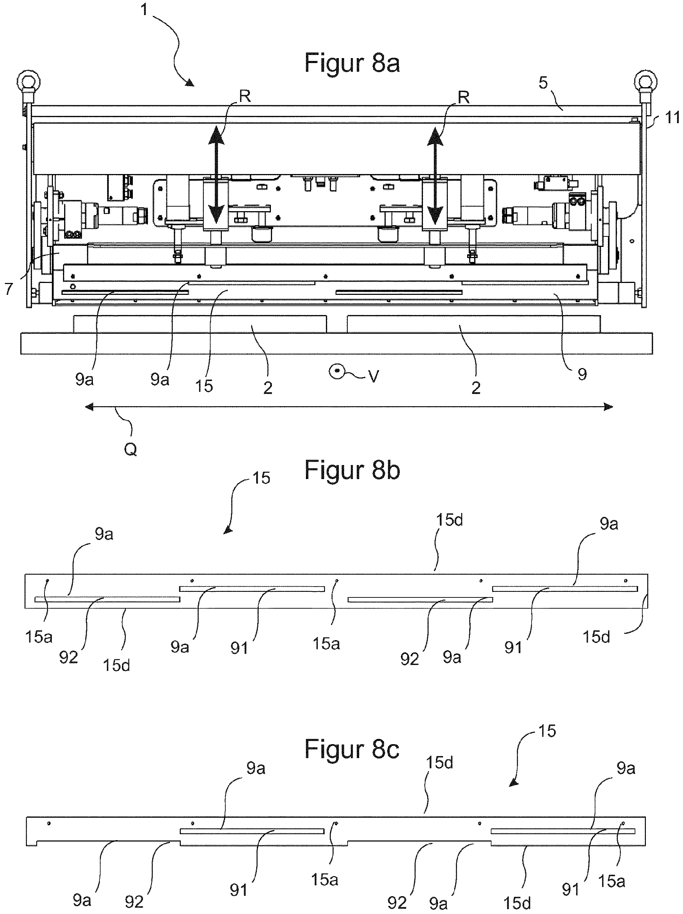

Figur 8a zeigt die Dosiervorrichtung 1 mit einem anderen Teilverschlusselement 15. Das abgebildete Teilverschlusselement 15 ist in Figur 8b vergrößert dargestellt. Dieses Teilverschlusselement 15 ist geeignet für die Verwendung von verschiedenen geöffneten Positionen des Verschlusses 7. Die Ausnehmungen 9a sind rechteckig ausgeführt. Die Ausnehmungen in horizontaler Richtung nebeneinander angeordnet und in vertikaler Richtung leicht versetzt. Die rechteckige Form weist in der horizontalen Richtung eine größere Erstreckung als in der vertikalen Richtung auf. Sämtliche Ausnehmungen sind in der Fläche des Teilverschlusselements 15 mit einem zumindest geringen Abstand zum Rand 15d des Teilverschlusselements 15 angeordnet. Zur Befestigung weist das Teilverschlusselement 15 Bohrungen 15a auf. Das Teilverschlusselement 15 weist obere Ausnehmungen 91 und untere Ausnehmungen 92 auf, welche durch unterschiedliche geöffnete Positionen des Verschlusses 7 jeweils vor dem Auslass 6 anordenbar sind.

Figur 8c zeigt eine weiter Ausführungsform des Teilverschlusselements 15. Bei dieser Ausführungsform sind sowohl Ausnehmungen 9a in der Fläche als direkt angrenzend zum unteren Rand 15d als auch in der Fläche des Teilverschlusselements 15 angeordnet. Zur Befestigung weist auch dieses Teilverschlusselement 15 Bohrungen 15a auf.

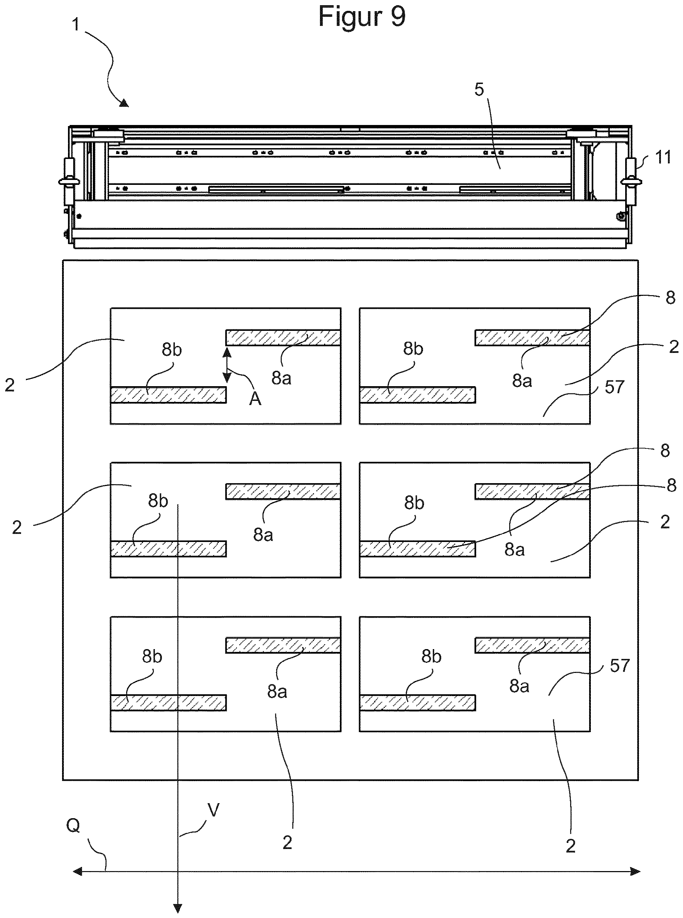

Figur 9 zeigt die Dosiervorrichtung 1 mit fertig befüllten Steinformelementen 2 in Aufsicht. Bei der Befüllung der Steinformelemente 2 mit der zweiten Schüttgutkomponente 8 ist ein Teilverschlusselement 15 verwendet worden ähnlich zu dem in Figur 8b gezeigten Teilverschlusselement 15. Die zweite Schüttgutkomponente 8 ist so in quer zur Verschieberichtung V ausgerichteten Streifen in die Steinformelemente 2 einfüllbar. Dabei sind in einer ersten geöffneten Position des Verschlusses 7 zunächst nur die oberen Ausnehmungen 91 (s. Fig. 8b) vor dem Auslass 6 angeordnet und erzeugen die ersten Streifen 8a der zweiten Schüttgutkomponente. Die zweiten Streifen 8b sind durch die Anordnung der unteren Ausnehmungen 92 (s. Fig. 8b) vor dem Auslass 6 in einer zweiten geöffneten Position des Verschlusses 7 erzeugbar. Je nach Geschwindigkeit des Positionswechsels zwischen den beiden geöffneten Positionen und/oder der Geschwindigkeit der Dosiervorrichtung 1 in oder entgegen der Verschieberichtung V, ist ein beliebiger Abstand A zwischen den ersten und zweiten Streifen 8a, 8b in den Steinformelementen 2 erzeugbar.

Figuren 10a und 10b zeigen verschiedene Anordnungsmöglichkeiten der Dosiervorrichtung 1 an einem Füllwagen 3. Figur 8a zeigt eine Ausführungsform bei welcher die Dosiervorrichtung 1 unmittelbar am Füllkasten 35 des Füllwagens 3 angeordnet ist. In Verschieberichtung V unmittelbar neben der Dosiervorrichtung 1 sind ein Walzenelement 86 und ein anheb- und absenkbares Abstreifelement 85 angeordnet. Bei dieser Positionierung ist es ebenfalls denkbar die Dosiervorrichtung 1 im Füllkasten 35 des Füllwagens 3 anzuordnen, was jedoch mit einem reduzierten Füllkastenvolumen des Füllwagens 3 einhergeht. Bei der beschriebenen Anordnungsreihenfolge wird die streifenförmig eingefüllte zweite Schüttgutkomponente 8 bevorzugt mit Hilfe des Walzenelements 86 in den Steinformelementen 2 nivelliert, wodurch ein verwischteres Streifenmuster erzeugbar ist. Figur 8b zeigt eine hierzu alternative Anordnung, in welcher das Walzenelement zwischen der Dosiervorrichtung 1 und dem Füllwagen 3 und das Abstreifelement 85 auf der anderen Seite der Dosiervorrichtung 1 angeordnet ist. Bei Einfüllen der zweiten Schüttgutkomponente 8 im Rückhub des Füllwagens 3 und der Dosiervorrichtung 1 ist im Nachlauf, bei angehobenem Abstreifelement 85, kein weiteres Werkzeug angeordnet, sodass die Streifen der zweiten Schüttgutkomponente nicht verwischt werden. Bevorzugt findet die Glättung der Oberfläche in einem anschließenden Rüttelvorgang statt.

### Bezugszeichenliste

- 1: Dosiervorrichtung
- 2: Steinformelemente
- 3: Füllwagen
- 4: Füllvorrichtung der Steinformmaschine
- 5: Füllkasten der Dosiervorrichtung
- 6: Auslass der Dosiervorrichtung
- 7: Verschluss
- 8: zweite Schüttgutkomponente
- 8a: erste Streifen
- 8b: zweite Streifen
- 9: verschlossene Teilbereiche
- 9a: Ausnehmungen
- 10: Antriebseinheit
- 11: Rahmenvorrichtung
- 12: Flächenelement des Verschlusses
- 13: alternierendes Profil des Verschlusses
- 14: flächiger Teil des Verschlusses
- 14a: Bohrung
- 15: Teilverschlusselement
- 15a: Bohrung
- 15b: weiteres Teilverschlusselement
- 15c: noch ein weiteres Teilverschlusselement
- 15d: Rand
- 21: eine erste Reihe von Steinformelementen
- 22: eine zweite Reihe von Steinformelementen
- 23: eine dritte Reihe von Steinformelementen
- 31: Silo
- 32: erste Kammer
- 32a: Auslass
- 33: zweite Kammer
- 33a: Auslass
- 34: Trennwand
- 35: Füllkasten des Füllwagens
- 36: Auslass des Füllwagens
- 40: Einfüllöffnung
- 41: Vorderseite
- 42: Antrieb
- 42a: Endanschlag
- 43: Rückseite
- 44: Rundung
- 45: Boden
- 46: Hebel
- 47: Tragelement
- 48: Ende
- 49: anderes Ende
- 49a: Drehachse
- 50: Balgzylinder
- 51: Abdeckplatte
- 51a: Grundseite
- 51b: linker Schenkel
- 51c: rechter Schenkel
- 52: Rührelement
- 53: Seitenelement
- 54: Stange
- 55: Rückwand
- 56: Befestigungsösen
- 57: erste Schüttgutkomponente
- 58: Zähne
- 58a: Grundseite
- 58b: linker Rand
- 58c: rechter Rand
- 59: Ausnehmungen
- 59a: Grundseite
- 59b: linker Rand
- 59c: rechter Rand
- 85: Abstreifelement
- 86: Walzenelement
- 91: obere Ausnehmungen
- 92: untere Ausnehmungen
- A: Abstand
- V: Verschieberichtung
- Q: Querrichtung
- R: Richtung der Verschlussbewegung
- b₁: Breite der Ausnehmungen
- b₂: Breite der Zähne

## Patentansprüche

1. Dosiervorrichtung (1) zur Dosierung von Schüttgut in Steinformelemente (2) und zur Anordnung an einem Füllwagen (3) einer Füllvorrichtung einer Steinformmaschine (4) zur Herstellung von gemusterten Steinen, insbesondere Pflastersteinen, wobei der Füllwagen (3) über Steinformelementen (2) in einer Verschieberichtung (V) vor- und zurückschiebbar ist und mit diesem eine erste Schüttgutkomponente in die Steinformelemente (2) füllbar ist und die Dosiervorrichtung (1) zumindest einen Füllkasten (5) umfasst, wobei der Füllkasten (5) einen unteren Auslass (6) aufweist, welcher mit Hilfe eines Verschlusses (7) öffen- und verschließbar ist, wobei durch den unteren Auslass (6) eine zweite Schüttgutkomponente (8) aus dem Füllkasten (5) in die Steinformelemente (2) füllbar ist,
**dadurch gekennzeichnet, dass**
der Auslass (6) im geöffneten Zustand mit Hilfe eines Teilverschlusselements (15) in einer Richtung (Q) quer zur Verschieberichtung (V) noch in Teilbereichen (9) verschließbar ist, sodass die zweite Schüttgutkomponente (8) segmentartig in die Steinformelemente (2) füllbar ist und die segmentartig austretende zweite Schüttgutkomponente (8) mit Hilfe einer Antriebseinheit (10), welches an der Dosiervorrichtung (1) angeordnet ist, quer zur Verschieberichtung (V) in einer Querrichtung (Q) und gegenüber den Steinformelementen (2) hin- und her bewegbar ist, wobei das Teilverschlusselement eine flächige Grundform aufweist, welche komplementär zur Form des Auslasses aufgeführt ist.

2. Dosiervorrichtung (1) nach Anspruch 1,
**dadurch gekennzeichnet, dass**
der Auslass (6) quer zur Verschieberichtung (V) über die gesamte Breite des Füllkastens (5) angeordnet ist.

3. Dosiervorrichtung (1) nach Anspruch 1 oder 2,
**dadurch gekennzeichnet, dass**
das Teilverschlusselement (15) zumindest im geöffneten Zustand des Verschlusses (7) unmittelbar vor dem Auslass (6) angeordnet ist und das Teilverschlusselement (15) in seiner den Auslass (6) abdeckenden Erstreckung Ausnehmungen (9a) aufweist, sodass der Auslass (6) mit dem Teilverschlusselement (15) in Teilbereichen (9) verschließbar ist und die zweite Schüttgutkomponente (8) durch die Ausnehmungen (9a) aus dem Füllkasten (5) in die Steinformelemente (2) füllbar ist.

4. Dosiervorrichtung (1) nach einem der vorherigen Ansprüche,
**dadurch gekennzeichnet, dass**
das Teilverschlusselement (15) auswechselbar ist.

5. Dosiervorrichtung (1) nach einem der vorherigen Ansprüche,
**dadurch gekennzeichnet, dass**
die Dosiervorrichtung (1) zumindest eine Rahmenvorrichtung (11) aufweist, welche an zumindest einer Seite des Füllkastens (5) angeordnet ist, an welcher der Füllkasten (5) hängend befestigbar ist.

6. Dosiervorrichtung (1) nach einem der vorherigen Ansprüche,
**dadurch gekennzeichnet, dass**
mit der Antriebseinheit (10) der Füllkasten (5) gegenüber der Rahmenvorrichtung (11) in zumindest einer Richtung (Q) quer zur Verschieberichtung (V) hin- und her bewegbar ist.

7. Dosiervorrichtung (1) nach einem der vorherigen Ansprüche,
**dadurch gekennzeichnet, dass**
mit der Antriebseinheit (10) zumindest das Teilverschlusselement (15) gegenüber dem Füllkasten (5) in zumindest einer Richtung (Q) quer zur Verschieberichtung (V) hin- und her bewegbar ist.

8. Dosiervorrichtung (1) nach einem der vorherigen Ansprüche,
**dadurch gekennzeichnet, dass**
der Verschluss (7) als Schieber ausgeführt ist, wobei der Verschluss (7) zumindest in einer Verschieberichtung parallel zur Ebene der Öffnung des Auslasses (6) verschiebbar und damit aus einer den Auslass (6) verschließenden Position in eine geöffnete Position bringbar ist.

9. Dosiervorrichtung (1) nach einem der vorherigen Ansprüche,
**dadurch gekennzeichnet, dass**
das Teilverschlusselement (15) als Teil des Verschlusses (7) ausgeführt ist, wobei das Teilverschlusselement (15) in der geöffneten Position des Verschlusses (7) unmittelbar vor dem Auslass (6) angeordnet ist und diesen in Teilbereichen (9) verschließt.

10. Dosiervorrichtung (1) nach einem der vorherigen Ansprüche,
**dadurch gekennzeichnet, dass**
in Verschieberichtung des Verschlusses (7) mehrere Teilverschlusselemente (15b, 15c) aneinander angeordnet sind, wobei der Verschluss (7) in Verschieberichtung in verschiedene geöffnete Positionen verschiebbar ist, in welchen jeweils ein Teilverschlusselement (15b, 15c) vor dem Auslass (6) angeordnet ist.

11. Dosiervorrichtung (1) nach einem der Ansprüche 1 bis 7,
**dadurch gekennzeichnet, dass**
der Verschluss (7) als Klappe ausgeführt ist, welche durch Drehung um eine Drehachse, welche parallel zu zumindest einer der Außenkanten des Verschlusses (7) angeordnet ist, aus einer den Auslass (6) verschließenden Position in eine geöffnete Position bringbar ist.

12. Verfahren zur Herstellung von gemusterten Steinen, insbesondere Pflastersteinen, mit einer Füllvorrichtung einer Steinformmaschine (4) umfassend Steinformelemente (2), einen Füllwagen (3), mit welchem eine erste Schüttgutkomponente in die Steinformelemente (2) füllbar ist und welcher in einer Verschieberichtung (V) über den Steinformelementen (2) vor- und zurückschiebbar ist, sowie eine am Füllwagen (3) angeordnete Dosiervorrichtung (1), wobei die Dosiervorrichtung (1) zumindest eine Antriebseinheit (10) und einen Füllkasten (5) umfasst, wobei der Füllkasten (5) einen unteren Auslass (6) aufweist, welcher mit Hilfe eines Verschlusses (7) öffen- und verschließbar ist, wobei der der Auslass (6) im geöffneten Zustand mit Hilfe eines Teilverschlusselements (15) ) in einer Richtung (Q) quer zur Verschieberichtung (V) noch in Teilbereichen (9) verschließbar ist, sodass die zweite Schüttgutkomponente (8) segmentartig in die Steinformelemente (2) füllbar ist, wobei das Teilverschlusselement eine flächige Grundform aufweist, welche komplementär zur Form des Auslasses aufgeführt ist, umfassend die Schritte:
- Einfüllen der ersten Schüttgutkomponente aus dem Füllwagen (3) in die Steinformelemente (2) durch Bewegung des Füllwagens (3) in oder entgegen einer Verschieberichtung (V) über die Steinformelemente (2);
- Öffnen des Verschlusses (7) des Auslasses (6) der Dosiervorrichtung (1) und Einfüllen der zweiten Schüttgutkomponente durch Bewegung der Dosiervorrichtung (1) über die Steinformelemente (2) in oder entgegen der Verschieberichtung (V) bei gleichzeitigem Hin- und Her-Bewegen der austretenden zweiten Schüttgutkomponente gegenüber den Steinformelementen (2) in einer Querrichtung (Q) quer zur Verschieberichtung (V) mit Hilfe der Antriebseinheit (10).

## Claims

1. Dosing apparatus (1) for dosing of bulk material into block-forming elements (2) and for arrangement on a filling truck (3) of a filling apparatus of a block-forming machine (4) for producing patterned blocks, in particular paving blocks, wherein the filling truck (3) can be pushed forwards and backwards in a displacement direction (V) over block-forming elements (2) and a first bulk material component can be filled into the block-forming elements (2) by the filling truck, and the dosing apparatus (1) comprises at least one filling box (5), wherein the filling box (5) has a lower outlet (6) which can be opened and closed with the aid of a closure (7), wherein a second bulk material component (8) can be filled from the filling box (5) into the block-forming elements (2) through the lower outlet (6), **characterised in that** the outlet (6) in its open state can still be closed in part-regions (9) in a direction (Q) transverse to the displacement direction (V) with the aid of a partial closure element (15), so that the second bulk material component (8) can be filled into the block forming elements (2) in segments, and the second bulk material component (8) which emerges in segments can be moved to and fro in a transverse direction (Q) transverse to the displacement direction (V) and relative to the block-forming elements (2) with the aid of a drive unit (10) which is arranged on the dosing apparatus (1), wherein the partial closure element has a flat basic shape which is designed to be complementary to the shape of the outlet.

2. Dosing apparatus (1) according to claim 1, **characterised in that** the outlet (6) is arranged transversely to the displacement direction (V) over the entire width of the filling box (5).

3. Dosing apparatus (1) according to claim 1 or 2, **characterised in that** at least when the closure (7) is in the open state the partial closure element (15) is arranged directly in front of the outlet (6) and the partial closure element (15) has recesses (9a) in its extension covering the outlet (6), so that the outlet (6) can be closed by the partial closure element (15) in part-regions (9), and the second bulk material component (8) can be filled from the filling box (5) into the block-forming elements (2) through the recesses (9a).

4. Dosing apparatus (1) according to any one of the preceding claims, **characterised in that** the partial closure element (15) is replaceable.

5. Dosing apparatus (1) according to any one of the preceding claims, **characterised in that** the dosing apparatus (1) has at least one frame apparatus (11) arranged on at least one side of the filling box (5) to which the filling box (5) can be fastened in a suspended manner.

6. Dosing apparatus (1) according to any one of the preceding claims, **characterised in that** the filling box (5) can be moved to and fro relative to the frame apparatus (11) in at least one direction (Q) transverse to the displacement direction (V) by means of the drive unit (10).

7. Dosing apparatus (1) according to any one of the preceding claims, **characterised in that** at least the partial closure element (15) can be moved to and fro relative to the filling box (5) in at least one direction (Q) transverse to the displacement direction (V) by means of the drive unit (10).

8. Dosing apparatus (1) according to any one of the preceding claims, **characterised in that** the closure (7) is designed as a slider, wherein the closure (7) can be displaced at least in one displacement direction parallel to the plane of the opening of the outlet (6) and can thus be brought from a position which closes the outlet (6) into an open position.

9. Dosing apparatus (1) according to any one of the preceding claims, **characterised in that** the partial closure element (15) is designed as part of the closure (7), wherein the partial closure element (15) is arranged directly in front of the outlet (6) in the open position of the closure (7) and closes the outlet in part-regions (9).

10. Dosing apparatus (1) according to any one of the preceding claims, **characterised in that** a plurality of partial closure elements (15b, 15c) are arranged on one another in the displacement direction of the closure (7), wherein the closure (7) can be displaced in the displacement direction into different open positions, in each of which a respective partial closure element (15b, 15c) is arranged in front of the outlet (6).

11. Dosing apparatus (1) according to any one of claims 1 to 7, **characterised in that** the closure (7) is designed as a flap which can be brought from a position which closes the outlet (6) into an open position by rotation about an axis of rotation arranged parallel to at least one of the outer edges of the closure (7).

12. Method for producing patterned blocks, in particular paving blocks, by means of a filling apparatus of a block-making machine (4) comprising block-forming elements (2), a filling truck (3) by which a first bulk material component can be filled into the block-forming elements (2), and which can be pushed forwards and backwards over the block-forming elements (2) in a displacement direction (V), and a dosing apparatus (1) arranged on the filling car (3), wherein the dosing apparatus (1) comprises at least one drive unit (10) and a filling box (5), wherein the filling box (5) has a lower outlet (6) which can be opened and closed with the aid of a closure (7), wherein the outlet (6) in its open state can still be closed in part-regions (9) in a direction (Q) transverse to the displacement direction (V) with the aid of a partial closure element (15), so that the second bulk material component (8) can be filled into the block-forming elements (2) in segments, wherein the partial closure element has a flat basic shape which is designed to be complementary to the shape of the outlet, comprising the steps:
- filling the first bulk material component from the filling truck (3) into the block-forming elements (2) by moving the filling car (3) over the block-forming elements (2) in or contrary to a displacement direction (V);
- opening the closure (7) of the outlet (6) of the dosing apparatus (1) and filling the second bulk material component by moving the dosing apparatus (1) over the block-forming elements (2) in or contrary to the displacement direction (V), with simultaneous movement of the emerging second bulk material component to and fro relative to the block-forming elements (2) in a transverse direction (Q) transverse to the displacement direction (V) with the aid of the drive unit (10).

## Revendications

1. Dispositif de dosage (1) destiné à doser des matières en vrac dans des éléments de blocs de pierre (2) et à être agencé contre un chariot de remplissage (3) d'un dispositif de remplissage d'une machine de blocs de pierre (4) pour la fabrication de pierres façonnées, en particulier de pavés, dans lequel le chariot de remplissage (3) peut être coulissé vers l'avant et vers l'arrière par-dessus des éléments de blocs de pierre (2) dans une direction de coulissement (V) et avec celui-ci une première composante de matière en vrac peut être déversée jusque dans des éléments de blocs de pierre (2) et le dispositif de dosage (1) comprend au moins un caisson de remplissage (5), dans lequel le caisson de remplissage (5) présente une sortie (6) inférieure, laquelle peut être ouverte ou fermée à l'aide d'une fermeture (7), dans lequel une seconde composante de matière en vrac (8) peut être déversée à travers la sortie (6) inférieure depuis le caisson de remplissage (5) jusque dans les éléments de blocs de pierre (2),
**caractérisé en ce que**
la sortie (6) à l'état ouvert peut également être fermée dans des régions partielles (9) à l'aide d'un élément de fermeture partielle (15) dans une direction (Q) transversale à la direction de coulissement (V), de sorte que la seconde composante de matière en vrac (8) puisse être déversée par segments jusque dans les éléments de blocs de pierre (2) et la seconde composante de matière en vrac (8) sortant par segments peut être déplacée en va-et-vient transversalement à la direction de coulissement (V) dans une direction transversale (Q) et par rapport à des éléments de blocs de pierre (2) à l'aide d'une unité d'entraînement (10), laquelle est agencée contre le dispositif de dosage (1), dans lequel l'élément de fermeture partielle présente une forme de base plane, laquelle est conçue de façon complémentaire à la forme de la sortie.

2. Dispositif de dosage (1) selon la revendication 1,
**caractérisé en ce que**
la sortie (6) est agencée transversalement à la direction de coulissement (V) par-dessus l'ensemble de la largeur du caisson de remplissage (5).

3. Dispositif de dosage (1) selon la revendication 1 ou 2,
**caractérisé en ce que**
l'élément de fermeture partielle (15) au moins à l'état ouvert de la fermeture (7) est agencé immédiatement avant la sortie (6) et l'élément de fermeture partielle (15) présente des évidements (9a) dans son étendue recouvrant la sortie (6), de sorte que la sortie (6) puisse être fermée dans des régions partielles (9) avec l'élément de fermeture partielle (15) et la seconde composante de matière en vrac (8) puisse être déversée à travers les évidements (9a) depuis les caissons de remplissage (5) jusque dans les éléments de blocs de pierre (2).

4. Dispositif de dosage (1) selon l'une des revendications précédentes,
**caractérisé en ce que**
l'élément de fermeture partielle (15) peut être échangé.

5. Dispositif de dosage (1) selon l'une des revendications précédentes,
**caractérisé en ce que**
le dispositif de dosage (1) présente au moins un dispositif de cadre (11), lequel est agencé contre au moins un côté du caisson de remplissage (5), contre lequel le caisson de remplissage (5) peut être fixé en suspension.

6. Dispositif de dosage (1) selon l'une des revendications précédentes,
**caractérisé en ce que**
avec l'unité d'entraînement (10), le caisson de remplissage (5) peut être déplacé en va-et-vient par rapport au dispositif de cadre (11) dans au moins une direction (Q) transversale à la direction de coulissement (V).

7. Dispositif de dosage (1) selon l'une des revendications précédentes,
**caractérisé en ce que**
avec l'unité d'entraînement (10), au moins l'élément de fermeture partielle (15) peut être déplacé en va-et-vient par rapport au caisson de remplissage (5) dans au moins une direction (Q) transversale à la direction de coulissement (V).

8. Dispositif de dosage (1) selon l'une des revendications précédentes,
**caractérisé en ce que**
la fermeture est conçue en tant que coulisseau, dans lequel la fermeture (7) peut être coulissée au moins dans une direction de coulissement parallèle au plan de l'orifice de la sortie (6) et ce faisant amenée depuis une position fermant la sortie (6) jusque dans une position ouverte.

9. Dispositif de dosage (1) selon l'une des revendications précédentes,
**caractérisé en ce que**
l'élément de fermeture partielle (15) est conçu en tant que partie de la fermeture (7), dans lequel l'élément de fermeture partielle (15) dans la position ouverte de la fermeture (7) est agencé immédiatement avant la sortie (6) et ferme celle-ci en régions partielles (9).

10. Dispositif de dosage (1) selon l'une des revendications précédentes,
**caractérisé en ce que**
dans la direction de coulissement de la fermeture (7) sont agencés les uns derrière les autres plusieurs éléments de fermeture partielle (15b, 15c), dans lequel la fermeture (7) peut être coulissée dans la direction de coulissement jusque dans différentes positions ouvertes, dans lesquelles un élément de fermeture partielle (15b, 15c) est respectivement agencé avant la sortie (6).

11. Dispositif de dosage (1) selon l'une des revendications 1 à 7, **caractérisé en ce que**
la fermeture (7) est conçue en tant que volet, lequel peut être amené par rotation autour d'un axe de rotation, lequel est agencé en parallèle d'au moins un des bords extérieurs de la fermeture (7), depuis une position fermant la sortie (6) jusque dans une position ouverte.

12. Procédé de fabrication de pierres façonnées, en particulier de pavés, avec un dispositif de remplissage d'une machine de blocs de pierre (4) comprenant des éléments de blocs de pierre (2), un chariot de remplissage (3), avec lequel une première composante de matière en vrac peut être déversée jusque dans les éléments de blocs de pierre (2) et lequel peut être coulissé vers l'avant et vers l'arrière par-dessus les éléments de blocs de pierre (2) dans une direction de coulissement (V), ainsi qu'un dispositif de dosage (1) agencé contre le chariot de remplissage (3), dans lequel le dispositif de dosage (1) comprend au moins une unité d'entraînement (10) et un caisson de remplissage (5), dans lequel le caisson de remplissage (5) présente une sortie (6) inférieure, laquelle peut être ouverte ou fermée à l'aide d'une fermeture (7), dans lequel la sortie (6) à l'état ouvert peut également être fermée dans des régions partielles (9) à l'aide d'un élément de fermeture partielle (15) dans une direction (Q) transversale à la direction de coulissement (V), de sorte que la seconde composante de matière en vrac (8) puisse être déversée par segments jusque dans les éléments de blocs de pierre (2), dans lequel l'élément de fermeture partielle présente une forme de base plane, laquelle est conçue de façon complémentaire à la forme de la sortie, comprenant les étapes consistant à :
- déverser la première composante de matière en vrac depuis le chariot de remplissage (3) jusque dans les éléments de blocs de pierre (2) par déplacement du chariot de remplissage (3) par-dessus les éléments de blocs de pierre (2) dans ou à l'encontre de la direction de coulissement (V) ;
- ouvrir la fermeture (7) de la sortie (6) du dispositif de dosage (1) et déverser la seconde composante de matière en vrac par déplacement du dispositif de dosage (1) par-dessus les éléments de blocs de pierre (2) dans ou à l'encontre de la direction de coulissement (V) lors d'un déplacement simultané en va-et-vient de la seconde composante de matière en vrac sortante par rapport aux éléments de blocs de pierre (2) dans une direction transversale (Q) transversale à la direction de coulissement (V) à l'aide de l'unité d'entraînement (10).
